# EUROPEAN PATENT SPECIFICATION

(11) **EP 3 242 809 B1**
(45) Date of publication and mention of the grant of the patent: **06.03.2019**
(21) Application number: 16701992.6
(22) Date of filing: 06.01.2016
(51) Int. Cl.: B60K 35/00, B60K 37/02, B60H 1/00

(54) **DASHBOARD WITH A DISPLAY UNIT AND METHOD OF OPERATING A VEHICLE WITH SUCH DASHBOARD**
ARMATURENBRETT MIT EINER ANZEIGEEINHEIT UND VERFAHREN ZUM BETREIBEN EINES FAHRZEUGES MIT EINER SOLCHEN ANZEIGEEINHEIT
TABLEAU DE BORD AVEC UNE UNITÉ D'AFFICHAGE ET MÉTHODE DE FONCTIONNEMENT D'UN VÉHICULE AVEC UNE TELLE UNITÉ D'AFFICHAGE

(30) Priority: 08.01.2015 DE 102015200143
(43) Date of publication of application: 15.11.2017
(73) Proprietor: Visteon Global Technologies, Inc., Van Buren Township, Michigan 48111 (US)
(72) Inventor: BOETTGER, Stefan, 50129 Bergheim (DE)
(74) Representative: Dummett Copp LLP
(86) International application number: PCT/IB2016/000002
(87) International publication number: WO 2016/110777

(56) References cited:
- JP-A- 2003 170 761
- JP-A- 2006 248 323
- US-A- 5 204 666

## Description

The invention relates to a dashboard of a vehicle and to a method of operating a vehicle. The vehicle has an air conditioner that can be run in a defrosting mode for defrosting a windshield of the vehicle by air conducted to the windshield. The dashboard has a head-up display.

Vehicle dashboards with a head-up display are generally known in the state of the art. A head-up display usually comprises a projection screen to display information which is projected onto the screen. The projection screen often is transparent and arranged in the field of vision of a driver of the vehicle. Furthermore, a head-up display may be retracted into a cavity inside the vehicle dashboard when the head-up display is deactivated, and moved out of the cavity for being used. Examples of such head-up displays are disclosed in US 5,204,666, which shows the features of the preamble of claim 1, and JP 2006 248323 A.

Vehicle dashboards often also comprise at least one defrosting air outlet which, in particular in a defrosting mode of an air conditioner of the vehicle, is used to conduct air to a frosted or fogged vehicle windshield above the dashboard. JP 2003170761 A discloses defrosting the windscreen to improve display properties of a head-up display projected on the windscreen.

It is an object of the present invention to provide an improved vehicle dashboard having a head-up display and a defrosting air outlet and optimizing the conduction of air to a vehicle windshield. Furthermore, it is an object of the present invention to provide a method of operating a vehicle comprising an air conditioner and a dashboard that has a defrosting air outlet for the air conditioner and a head-up display.

The object is achieved by a dashboard according to claim 1 and a method according to claim 10.

Preferred embodiments of the invention are given in the dependent claims.

According to the invention the object is solved by a dashboard of a vehicle, the vehicle having a windshield and an air conditioner that can be run in a defrosting mode for defrosting the windshield by air conducted to the windshield, and the dashboard comprising a defrosting air outlet for the air conditioner for conducting air to the windshield in the defrosting mode of the air conditioner and a head-up display, characterised in that the head-up display is automatically deactivatable when the defrosting mode of the air conditioner is activated or running.

The invention takes into account that, when the defrosting mode of the air conditioner is activated or running, a user of the vehicle, in particular a vehicle driver, usually has an obstructed view through the windshield because the windshield is frosted or fogged. As a consequence, the head-up display will not be useful for him. Furthermore, the head-up display, when it is in its exposed position, may impede optimal defrosting of the windshield because usually it is positioned within the airflow emitted by the defrosting air outlet. Therefore, when the defrosting mode of the air conditioner is activated or running, an automatical deactivation of the head-up display allows for optimal windshield defrosting.

In an exemplary embodiment of the invention the head-up display comprises a projection screen onto which information is projected and which preferably is in the field of vision of a vehicle driver of the vehicle when the head-up display is activated. This allows to project information in the field of vision of the vehicle driver so that the driver does not need to turn the head to see the information and thus can keep track of the road and traffic ahead of the vehicle.

Furthermore, the projection screen may be transparent. This advantageously prevents the screen from blocking part of the view through the windshield.

In a further exemplary embodiment of the invention the projection screen is moved into a predefined deactivation position when the head-up display is deactivated. In particular, in the deactivation position, the projection screen may be partially or fully retracted into an interior of the dashboard, or it may be flush with an outer dashboard surface surrounding the projection screen, or it may be pivoted by a predetermined pivot angle relative to an exposed position of the projection screen in the activated state of the head-up display. These embodiments of the invention advantageously allow to move the projection screen out of the airflow of air that is conducted to the windshield through the defrosting air outlet, and thus prevent that the projection screen impedes this airflow.

A vehicle according to the invention comprises a windshield, an air conditioner that can be run in a defrosting mode for defrosting the windshield by air conducted to the windshield, and a dashboard according to the invention, having the above mentioned advantages.

According to the invention, in a method of operating such a vehicle, the head-up display is automatically deactivated when the defrosting mode of the air conditioner is activated or running. In an exemplary embodiment of the invention a current operation mode of the air conditioner is detected using at least one sensor monitoring the air conditioner, and a deactivation signal is created and sent to the head-up display if the detected operation mode is the defrosting mode or an activation thereof. Furthermore, the head-up display may temporarily, for instance for a predefined time interval, be deactivated, or it may be deactivated until the defrosting mode of the air conditioner is deactivated and switched off.

### Brief Description of the Drawings

The present invention will become more fully understood from the detailed description given hereinbelow and the accompanying drawings which are given by way of illustration only, and thus do not limit the present invention, wherein:
- Figure 1: shows a perspective (partial) view of a vehicle with a dashboard having a defrosting air outlet and a head-up display in a first deactivation position,
- Figure 2: shows a perspective (partial) view of a vehicle with a dashboard having a defrosting air outlet and a head-up display in an exposed position and in a second deactivation position, and
- Figure 3: shows a flowchart of controlling a head-up display of a vehicle dashboard, depending on an operation mode of an air conditioner of the vehicle.

Corresponding parts are marked with the same reference symbols in all figures.

### Detailed Description of the Drawings

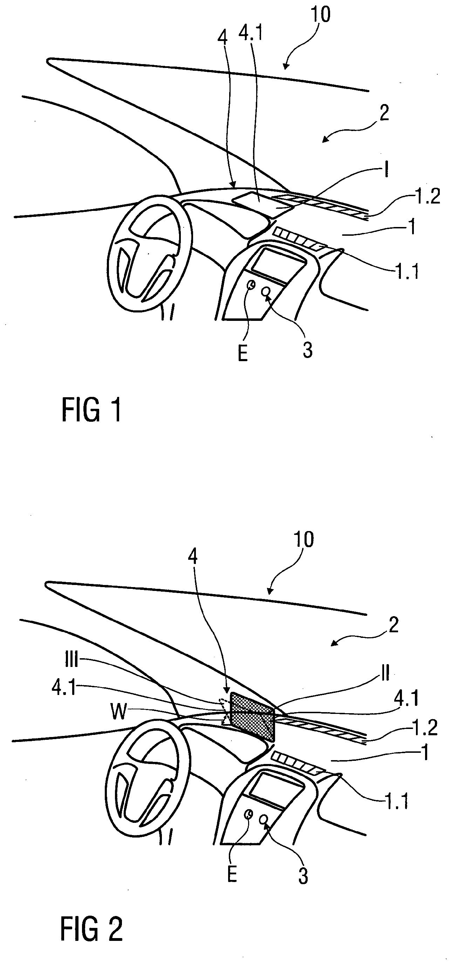

**Figure 1** shows a perspective (partial) view of a vehicle interior of a vehicle 10. The vehicle 10 comprises a dashboard 1, a windshield 2, and an air conditioner 3.

The air conditioner 3 can be run in a defrosting mode E for defrosting the windshield 2 by air conducted to the windshield 2. The defrosting mode E may be activated manually, for instance by a vehicle driver of the vehicle 10, and/or automatically by automatic climate control.

The dashboard 1 is placed in front of the vehicle driver below the windshield 2. The dashboard 1 has several air outlets 1.1 for air conditioning of the vehicle interior. In addition, the dashboard 1 has at least one defrosting air outlet 1.2 for the air conditioner 3. The defrosting air outlet 1.2 is placed close to the windshield 2 and, in the defrosting mode E of the air conditioner 3, conducts air to the windshield 2 in order to remove icing or fogging of the windshield 2.

Furthermore, the dashboard 1 has a head-up display 4. The head-up display 4 comprises a projection screen 4.1 onto which information, such as information concerning the vehicle 10 and/or its surroundings, is projected by an imaging unit and possibly by an optics module which are not shown in the figures. The projection screen 4.1 is placed in the field of vision of the vehicle driver when the head-up display 4 is activated, and may be transparent.

When the head-up display 4 is activated, the projection screen 4.1 is in an exposed position II in which it stands at least almost upright off the dashboard 1 in front the vehicle driver. When the defrosting mode E of the air conditioner 3 is activated or running, the head-up display 4 is automatically deactivated and the projection screen 4.1 is moved from the exposed position II into a predefined deactivation position I, III.

**Figure 1** shows the projection screen 4.1 in a first deactivation position I in which the projection screen 4.1 is flush with an outer surface of the dashboard 1 surrounding the projection screen 4.1.

**Figure 2** shows the projection screen 4.1 in the exposed position II and additionally in an alternative second deactivation position III (shown dashed in figure 2) in which the projection screen 4.1 is pivoted by a predetermined pivot angle W relative to the exposed position II.

Alternatively to the two alternative deactivation positions I, III shown in figures 1 and 2, the projection screen 4.1 may be moved into a third deactivation position (not shown in the figures) in which it is partially or fully retracted into a cavity in an interior of the dashboard 1.

When the defrosting mode E of the air conditioner 3 is activated or running, the head-up display 4 may temporarily, in particular for a predefined time interval, be deactivated. Alternatively, the head-up display 4 may be deactivated until the defrosting mode E of the air conditioner 3 is deactivated or switched off.

If the projection screen 4.1 is already in a deactivation position I, III when the defrosting mode E of the air conditioner 3 is activated or running, the projection screen 4.1 may be kept in the deactivation position I, III.

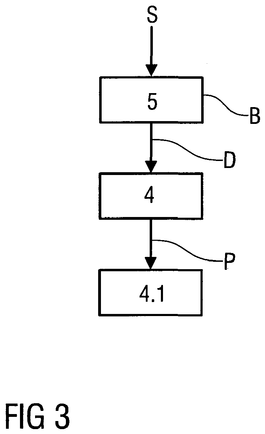

**Figure 3** shows a flowchart of controlling a head-up display 4 of the dashboard 1 depending on an operation mode B of the air conditioner 3 of the vehicle 10.

When operating the vehicle 10 the air conditioner 3 is monitored by sensors not shown in the figures. Sensor signals S of these sensors are sent to an air conditioner controller 5 which determines the current operation mode B of the air conditioner 3 on the basis of the sensor signals S.

One of the possible operation modes B is the activation or running of the defrosting mode E. If the air conditioner controller 5 detects that the defrosting mode E of the air conditioner 3 is activated or running, then the air conditioner controller 5 creates a deactivation signal D and sends it via a data transmission unit, for instance via a CAN bus (CAN = controller area network), to the head-up display 4, in particular to a controller unit of the head-up display 4.

Subsequently, on account of the deactivation signal D, the head-up display 4 is automatically deactivated as described above with reference to figures 1 and 2. The controller unit of the head-up display 4 creates a control signal P for the projection screen 4.1. Depending on the current position of the projection screen 4.1 the projection screen 4.1 either is kept in a deactivation position I, III or it is moved from the exposed position II into a deactivation position I, III.

### List of references

- 1: dashboard
- 1.1: air outlet
- 1.2: defrosting air outlet
- 2: windshield
- 3: air conditioner
- 4: head-up display
- 4.1: projection screen
- 5: air conditioner controller
- 10: vehicle

- B: operation mode
- E: defrosting mode
- D: deactivation signal
- P: control signal
- S: sensor signal
- W: pivot angle

- I: first deactivation position
- II: exposed position
- III: second deactivation position

## Claims

1. Dashboard (1) of a vehicle (10), the vehicle (10) having a windshield (2) and an air conditioner (3) that can be run in a defrosting mode (E) for defrosting the windshield (2) by air conducted to the windshield (2), the dashboard (1) comprising:
- a defrosting air outlet (1.2) for the air conditioner (3) to conduct air to the windshield (2) in the defrosting mode (E) of the air conditioner (3),
- and a head-up display (4), **characterised in that** the head-up display is automatically deactivatable when the defrosting mode (E) of the air conditioner (3) is activated or running.

2. Dashboard (1) according to claim 1,
wherein the head-up display (4) comprises a projection screen (4.1) onto which information is projected.

3. Dashboard (1) according to claim 2,
wherein the projection screen (4.1) is transparent.

4. Dashboard (1) according to claim 1 or 2,
wherein the projection screen (4.1) is in the field of vision of a vehicle driver of the vehicle (10) when the head-up display (4) is activated.

5. Dashboard (1) according to any one of claims 2 through 4,
wherein the projection screen (4.1) is moved into a predefined deactivation position (I, III) when the head-up display (4) is deactivated.

6. Dashboard (1) according to claim 5,
wherein, in the deactivation position (I, III), the projection screen (4.1) is partially or fully retracted into an interior of the dashboard (1).

7. Dashboard (1) according to claim 5,
wherein, in the deactivation position (I, III), the projection screen (4.1) is flush with an outer surface of the dashboard (1) surrounding the projection screen (4.1).

8. Dashboard (1) according to claim 5,
wherein, in the deactivation position (I, III), the projection screen (4.1) is pivoted by a predetermined pivot angle (W) relatively to an exposed position (II) of the projection screen (4.1) in the activated state of the head-up display (4).

9. Vehicle (10) comprising
- a windshield (2),
- an air conditioner (3) that can be run in a defrosting mode (E) for defrosting the windshield (2) by air conducted to the windshield (2),
- and a dashboard (1) according to any one of the preceding claims.

10. Method of operating a vehicle (10) according to claim 9, wherein the head-up display (4) is automatically deactivated when the defrosting mode (E) of the air conditioner (3) is activated or running.

11. Method according to claim 10,
wherein a current operation mode (B) of the air conditioner (3) is detected using at least one sensor monitoring the air conditioner (3), and wherein a deactivation signal (D) is created and sent to the head-up display (4) if the detected operation mode (B) is the defrosting mode (E) or an activation thereof.

12. Method according to claim 10 or 11,
wherein the head-up display (4) is temporarily deactivated when the defrosting mode (E) of the air conditioner (3) is activated or running.

13. Method according to claim 10 or 11,
wherein the head-up display (4) is deactivated until the defrosting mode (E) of the air conditioner (3) is deactivated or switched off.

## Patentansprüche

1. Armaturenbrett (1) eines Fahrzeuges (10), wobei das Fahrzeug (10) eine Windschutzscheibe (2) und eine Klimaanlage (3) aufweist, die in einem Entfrostungsmodus (E) betrieben werden kann, um die Windschutzscheibe (2) durch Luft, die der Windschutzscheibe (2) zugeführt wird, zu entfrosten, wobei das Armaturenbrett (1) Folgendes umfasst:
- einen Entfrostungsluftauslass (1.2) für die Klimaanlage (3), um der Windschutzscheibe (2) im Entfrostungsmodus (E) der Klimaanlage (3) Luft zuzuführen,
- und eine Blickfeldanzeige (4), **dadurch gekennzeichnet, dass** die Blickfeldanzeige automatisch deaktivierbar ist, wenn der Entfrostungsmodus (E) der Klimaanlage (3) aktiviert oder angeschaltet ist.

2. Armaturenbrett (1) nach Anspruch 1,
wobei die Blickfeldanzeige (4) eine Projektionsfläche (4.1) umfasst, auf die Informationen projiziert werden.

3. Armaturenbrett (1) nach Anspruch 2,
wobei die Projektionsfläche (4.1) transparent ist.

4. Armaturenbrett (1) nach Anspruch 1 oder 2,
wobei sich die Projektionsfläche (4.1) im Sichtfeld eines Fahrzeugführers des Fahrzeuges (10) befindet, wenn die Blickfeldanzeige (4) aktiviert ist.

5. Armaturenbrett (1) nach einem der Ansprüche 2 bis 4,
wobei die Projektionsfläche (4.1) in eine vordefinierte Deaktivierungsposition (I, III) bewegt wird, wenn die Blickfeldanzeige (4) deaktiviert ist.

6. Armaturenbrett (1) nach Anspruch 5,
wobei die Projektionsfläche (4.1) in der Deaktivierungsposition (I, III) teilweise oder vollständig in ein Inneres des Armaturenbretts (1) eingefahren ist.

7. Armaturenbrett (1) nach Anspruch 5,
wobei die Projektionsfläche (4.1) in der Deaktivierungsposition (I, III) bündig mit einer Außenfläche des Armaturenbretts (1) ist, die die Projektionsfläche (4.1) umgibt.

8. Armaturenbrett (1) nach Anspruch 5,
wobei die Projektionsfläche (4.1) in der Deaktivierungsposition (I, III) um einen zuvor festgelegten Schwenkwinkel (W) relativ zu einer exponierten Position (II) der Projektionsfläche (4.1) in dem aktivierten Zustand der Blickfeldanzeige (4) geschwenkt wird.

9. Fahrzeug (10), umfassend
- eine Windschutzscheibe (2),
- eine Klimaanlage (3), die in einem Entfrostungsmodus (E) betrieben werden kann, um die Windschutzscheibe (2) durch Luft, die der Windschutzscheibe (2) zugeführt wird, zu entfrosten,
- und ein Armaturenbrett (1) nach einem der vorhergehenden Ansprüche.

10. Verfahren zum Betreiben eines Fahrzeuges (10) nach Anspruch 9, wobei die Blickfeldanzeige (4) automatisch deaktiviert ist, wenn der Entfrostungsmodus (E) der Klimaanlage (3) aktiviert oder angeschaltet ist.

11. Verfahren nach Anspruch 10,
wobei ein aktueller Betriebsmodus (B) der Klimaanlage (3) unter Verwendung von zumindest einem Sensor, der die Klimaanlage (3) überwacht, erfasst wird, und wobei ein Deaktivierungssignal (D) erzeugt und an die Blickfeldanzeige (4) gesendet wird, wenn der erfasste Betriebsmodus (B) der Entfrostungsmodus (E) oder eine Aktivierung davon ist.

12. Verfahren nach Anspruch 10 oder 11,
wobei die Blickfeldanzeige (4) temporär deaktiviert ist, wenn der Entfrostungsmodus (E) der Klimaanlage (3) aktiviert oder angeschaltet ist.

13. Verfahren nach Anspruch 10 oder 11,
wobei die Blickfeldanzeige (4) deaktiviert ist, bis der Entfrostungsmodus (E) der Klimaanlage (3) deaktiviert oder ausgeschaltet ist.

## Revendications

1. Tableau de bord (1) d'un véhicule (10), le véhicule (10) ayant un pare-brise (2) et un conditionneur d'air (3) qui peut être exécuté dans un mode de dégivrage (E) pour dégivrer le pare-brise (2) par l'air conduit vers le pare-brise (2), le tableau de bord (1) comprenant :
- une sortie d'air de dégivrage (1.2) pour le conditionneur d'air (3) afin de conduire l'air vers le pare-brise (2) dans le mode de dégivrage (E) du conditionneur d'air (3),
- et un affichage tête haute (4), **caractérisé en ce que** l'affichage tête haute est automatiquement désactivable lorsque le mode de dégivrage (E) du conditionneur d'air (3) est activé ou exécuté.

2. Tableau de bord (1) selon la revendication 1,
dans lequel l'affichage tête haute (4) comprend un écran de projection (4.1) sur lequel des informations sont projetées.

3. Tableau de bord (1) selon la revendication 2,
dans lequel l'écran de projection (4.1) est transparent.

4. Tableau de bord (1) selon la revendication 1 ou 2,
dans lequel l'écran de projection (4.1) est dans le champ de vision d'un conducteur de véhicule du véhicule (10) lorsque l'affichage tête haute (4) est activé.

5. Tableau de bord (1) selon l'une quelconque des revendications 2 à 4,
dans lequel l'écran de projection (4.1) est déplacé dans une position de désactivation prédéfinie (I, III) lorsque l'affichage tête haute (4) est désactivé.

6. Tableau de bord (1) selon la revendication 5,
dans lequel, dans la position de désactivation (I, III), l'écran de projection (4.1) est partiellement ou entièrement rétracté dans un intérieur du tableau de bord (1).

7. Tableau de bord (1) selon la revendication 5,
dans lequel, dans la position de désactivation (I, III), l'écran de projection (4.1) affleure une surface extérieure du tableau de bord (1) entourant l'écran de projection (4.1).

8. Tableau de bord (1) selon la revendication 5,
dans lequel, dans la position de désactivation (I, III), l'écran de projection (4.1) est pivoté selon un angle de pivotement prédéterminé (W) par rapport à une position exposée (II) de l'écran de projection (4.1) dans l'état activé de l'affichage tête haute (4).

9. Véhicule (10) comprenant
- un pare-brise (2),
- un conditionneur d'air (3) qui peut être exécuté dans un mode de dégivrage (E) pour dégivrer le pare-brise (2) par l'air conduit vers le pare-brise (2),
- et un tableau de bord (1) selon l'une quelconque des revendications précédentes.

10. Méthode de fonctionnement d'un véhicule (10) selon la revendication 9, dans laquelle l'affichage tête haute (4) est automatiquement désactivé lorsque le mode de dégivrage (E) du conditionneur d'air (3) est activé ou exécuté.

11. Méthode selon la revendication 10,
dans laquelle un mode de fonctionnement actuel (B) du conditionneur d'air (3) est détecté en utilisant au moins un capteur surveillant le conditionneur d'air (3), et dans laquelle un signal de désactivation (D) est créé et envoyé à l'affichage tête haute (4) si le mode de fonctionnement détecté (B) est le mode de dégivrage (E) ou une activation de celui-ci.

12. Méthode selon la revendication 10 ou 11,
dans laquelle l'affichage tête haute (4) est temporairement désactivé lorsque le mode de dégivrage (E) du conditionneur d'air (3) est activé ou exécuté.

13. Méthode selon la revendication 10 ou 11,
dans laquelle l'affichage tête haute (4) est désactivé jusqu'à ce que le mode de dégivrage (E) du conditionneur d'air (3) soit désactivé ou éteint.
